# NEUE EUROPÄISCHE PATENTSCHRIFT

(11) **EP 1 053 671 B2**
(45) Veröffentlichungstag und Bekanntmachung des Hinweises auf die Entscheidung über den Einspruch: **20.02.2008**
(45) Hinweis auf die Patenterteilung: 02.06.2004
(21) Anmeldenummer: 00104194.6
(22) Anmeldetag: 01.03.2000
(51) Int. Cl.: A01D 41/12, G01N 21/35

(54) **Messeinrichtung zur Messung von Inhaltsstoffen in und/oder Eigenschaften von Erntegut**
Measuring device of components in and/or properties of the crop
Dispositif de mesure des substances contenues dans et/ou des propriétés des récoltes

(30) Priorität: 19.05.1999 DE 19922867
(43) Veröffentlichungstag der Anmeldung: 22.11.2000
(60) Teilanmeldung: 03029331.0
(73) Patentinhaber: DEERE & COMPANY, Moline, Illinois 61265-8098 (US)
(72) Erfinder: Ohlemeyer, Heinrich, 32479 Hille (DE); Kormann, Georg, 85350 Freising (DE)
(74) Vertreter: Holst, Sönke

(56) Entgegenhaltungen:
- EP-A- 0 511 184
- EP-A- 0 615 682
- WO-A-99/40419
- DE-A- 2 223 384
- DE-A- 3 211 731
- DE-A- 19 723 770
- DE-A- 19 922 867
- DE-C- 3 918 393
- US-A- 3 805 497
- US-A- 4 830 194
- US-A- 5 751 421

## Beschreibung

Die Erfindung betrifft eine Messeinrichtung zur Messung von Inhaltsstoffen in und/oder der Farbe von Erntegut, die an einer landwirtschaftlichen Maschine angebracht ist.

Im Stand der Technik (DE 196 48 126 A) sind Erntemaschinen bekannt, die mit Einrichtungen zum Messen des Gutdurchsatzes, der Feuchtigkeit und der Masse bzw. Dichte ausgestattet sind. Die Oberflächenfeuchtigkeit des Erntegutes wird mittels eines Infrarotsensors gemessen, während die Schichtdicke und Dichte sowie die Feuchtigkeit des Erntegutes mittels Mikrowellen mit Wellenlängen von 1 m bis herunter zu ca. 0,5 mm gemessen werden soll.

Die DE 32 32 746 C beschreibt eine Erntemaschine, insbesondere eine Ballenpresse, einen Ladewagen oder einen Mähdrescher mit einem Feuchtigkeitsensor, der am Weg des Ernteguts durch die Maschine vorgesehen ist.

In der US 5 327 708 A wird ein System zur Untersuchung von Erntegut vorgeschlagen. Bei einem Mähdrescher wird in regelmäßigen Zeitabständen eine Probe aus dem in den Korntank gelangenden Gutstrom entnommen und durch eine geeignete Einrichtung auf Masse, Feuchtigkeitsgehalt und Dichte untersucht. Auch andere Parameter des Guts, wie Proteingehalt, Zuckergehalt, Ölgehalt und Farbe können gemessen werden. Hier werden systembedingt nur an diskreten Stellen Messwerte aufgenommen, so dass nur eine lückenhafte Ertragskarte hergestellt werden kann.

Die nachveröffentlichte WO 99/40419 A beschreibt eine Überwachungseinrichtung für die Qualität geernteten Korns. Sie umfasst eine Lichtquelle und einen Analysator, der von einem vorbeiströmenden Strom geernteten Korns reflektiertes, von der Lichtquelle stammendes Licht wellenlängenselektiert. Anhand der Signale des Analysators werden Inhaltsstoffe des Korns analysiert.

Bei den vorgenannten Druckschriften sind die Messeinrichtungen innerhalb der Erntemaschine angeordnet und überwachen einen Strom bereits geernteten Ernteguts oder eine Probe davon. Als nachteilig ist anzusehen, dass man für jede Maschine einen entsprechend angepassten Sensor benötigt.

Das der Erfindung zugrunde liegende Problem wird darin gesehen, eine Messeinrichtung bereitzustellen, die diesen Nachteil nicht aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Messeinrichtung wird außerhalb einer landwirtschaftlichen Maschine angebracht. Die Messeinrichtung ist stromauf einer Gutaufnahmeeinrichtung der landwirtschaftlichen Maschine angeordnet und erfasst die Inhaltsstoffe und/oder Farbe des Ernteguts.

Ein Vorteil liegt darin, dass der Sensor von der landwirtschaftlichen Maschine unabhängig ist, und somit nacheinander an unterschiedlichen Geräten genutzt werden kann. So kann er in Verbindung mit einer Ballenpresse und einem Ladewagen verwendet werden. Außerdem sind dann Platzprobleme beim Einbau des Sensors in den Innenraum der landwirtschaftlichen Maschine nicht zu befürchten. Der Sensor wird zweckmäßigerweise lösbar an einer geeigneten Schnittstelle einer Datenaufnahmeeinrichtung angeschlossen. Auf diese Weise ist eine Bestimmung der Eigenschaften des von der landwirtschaftlichen Maschine aufgenommenen Ernteguts und/oder eine Ertragskartierung möglich.

Die Messeinrichtung ist insbesondere geeignet, sich von Wasser unterscheidende Inhaltsstoffgehalte des Erntegutes und/oder weitere Parameter bereits während der Ernte zu ermitteln. Ist ein Ortungssystem vorhanden, können die Daten auch georeferenziert aufgenommen werden. Nach Abschluss der Ernte können die gemessenen Parameter und/oder Inhaltsstoffgehalte des erzielten Ertrags sofort ausgegeben werden, was unter anderem als Grundlage für betriebswirtschaftliche Überlegungen dienen kann. Außerdem ergibt sich die Möglichkeit, dass die Daten zu entsprechenden Wertkarten (Ertragskarten) weiterverarbeitet werden. Diese Daten bilden die Grundlage für eine teilflächenspezifische Bewirtschaftung.

Die Messeinrichtung ist in der Nähe des Erntegutes angeordnet, da sie relativ zum Erntegut bewegt wird. Das Messergebnis kann zur Steuerung von Prozessparametern verwendet werden.

Als Inhaltsstoffe des Erntegutes, deren Anteile im Erntegut von der Messeinrichtung erfasst werden, kommen insbesondere organische Inhaltsstoffe in Betracht, wie Stärke, enzymlösliche organische Substanzen (ElosT), Öl, und Rohprotein. Außerdem kann auch der Gehalt an nichtorganischen Inhaltsstoffen, wie Mineralstoffen (Asche), z.B. Natrium und Magnesium, oder Wasser gemessen werden.

Sich von Volumen, Dichte und Masse unterscheidende Parameter des Erntegutes, die zusätzlich oder alternativ zu den Inhaltsstoffen erfasst und gespeichert werden können, sind insbesondere der Gehalt an Trockensubstanz, die Faserlänge, die Verdaulichkeit, der Energiegehalt und der Rohfasergehalt des Erntegutes. Der Rohfasergehalt und die Faserlänge kann insbesondere durch eine Weiterverarbeitung von Ausgangssignalen eines Sensors mittels eines Rechners ermittelt werden. Auch die Farbe des Erntegutes kann als Basis für die Qualitätsbestimmung bei vielen nachwachsenden Rohstoffen dienen.

Außerdem kann der Durchsatz an Erntegut und dessen Feuchtigkeit mittels geeigneter Sensoren erfasst und gemeinsam mit den sich auf die Inhaltsstoffe bzw. die anderen Parameter beziehenden Messwerten abgespeichert werden.

Als Messverfahren der Messeinrichtung bietet sich insbesondere die optische Spektroskopie im sichtbaren Wellenlängenbereich und/oder im nahen Infrarotbereich an. Die verwendeten Wellenlängen liegen zwischen 100 nm und 1 mm, vorzugsweise zwischen 400 nm und 1,7 µm. In diesen Wellenlängenbereichen lassen sich die insbesondere organischen Inhaltsstoffe durch die optische Spektroskopie besonders gut nachweisen. Dabei wird in der Regel eine Kalibrierung der optisch arbeitenden Messeinrichtung zweckmäßig sein.

Vorzugsweise findet ein optisches Spektrometer in der Messeinrichtung Verwendung, das die Intensität vom Erntegut reflektierten und/oder transmittierten Lichts wellenlängenaufgelöst erfasst. Dabei wird das Erntegut mit breitbandigem (sog. weissem) Licht beaufschlagt. Es ist auch denkbar, das Erntegut mit monochromatischem Licht zu beaufschlagen, das beispielsweise mittels eines Filters erzeugt wird. Dabei können nacheinander verschiedene Wellenlängen verwendet werden. Die einzelnen, lichtangeregten Schwingungsmoden der nachzuweisenden Inhaltsstoffe des Erntegutes (die sich durch Absorption, Streuung bzw. Extinktion auswirken), bzw. zur Messung der Parameter des Erntegutes selbst, können so erfasst und die gemessenen Daten einer geeigneten Auswertungseinrichtung zugeführt werden, die den jeweiligen Gehalt an den interessierenden Inhaltsstoffen bzw. die Parameter in an sich bekannter Weise errechnet (siehe z.B. US 5,258,825 und EP 511 184 A und darin genannte Referenzen). Das Spektrometer weist in ebenfalls an sich bekannter Weise vorzugsweise wenigstens ein Gitter und/oder Prisma und/oder mehrere Filter unterschiedlicher Wellenlängen auf. Als Detektoren können Halbleiterdetektoren, insbesondere CCDs, oder Photodioden aus Silizium bzw. Indium-Gallium-Arsenid, dienen.

Weiterhin wird vorgeschlagen, die Messeinrichtung auf einem Schlitten anzubringen, so dass sie eingerichtet ist, in einem Schwad abgelegtes Erntegut zu untersuchen.

Die Anbringung der Messeinrichtung kann beispielsweise an der Frontseite eines Zugfahrzeugs, z. B. Traktors und/oder an der Deichsel bzw. Kupplung eines an das Zugfahrzeug angehängten landwirtschaftlichen Geräts erfolgen. Auch eine Anbringung zur Untersuchung noch stehenden Ernteguts wäre denkbar. So kann eine Messeinrichtung an einem Schneidwerk oder einem Maisgebiss oder am Erntefahrzeug selbst angebracht sein, und das davorstehende Erntegut aus einem Abstand untersuchen. Es sind optische Messverfahren verwendbar, bei denen dieser Abstand kein Problem darstellt.

Als Maschine kommen Feldhäcksler, Mähdrescher, Ballenpressen, Ladewagen oder Hackfruchterntemaschinen infrage. Bei einer Ballenpresse, einem Feldhäckler oder einem Ladewagen kann das Messergebnis zur Steuerung der Zugabe von Silierstoffen verwendet werden. Des Weiteren kann die Erfindung auch in Maschinen eingesetzt werden, in denen das Gut stationär bearbeitet, bzw. transportiert wird. Beispielsweise kann die Messeinrichtung zum Frontanbau an einer landwirtschaftlichen Maschine, wie einem Traktor, eingerichtet sein und zur Untersuchung des in einem Schwad abgelegten Erntegutes dienen. Auch wäre eine Anbringung der Messeinrichtung an der Schaufel eines Frontladers oder an einem Teleskoplader denkbar. Auch an landwirtschaftlich genutzten Baumaschinen, wie Baggern, ist die Erfindung verwendbar.

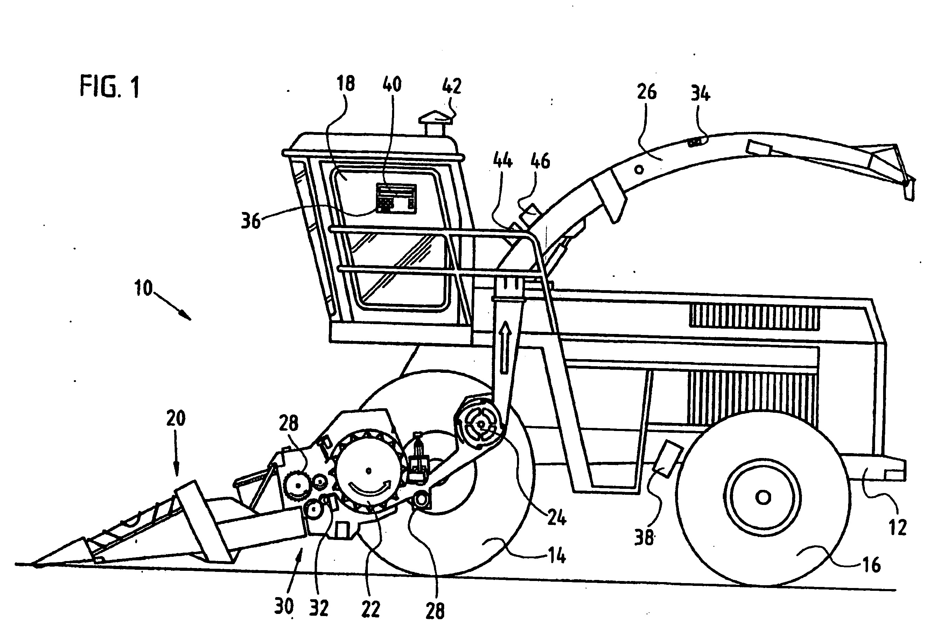

In den Zeichnungen sind nachfolgend näher beschriebene Ausführungsbeispiele der Erfindung dargestellt, wobei die Figuren 1 bis 4 eine Anordnung der Messeinrichtung zeigen, die nicht stromauf der Gutaufnahmeeinrichtung der Erntemaschine angeordnet ist und nicht unter den Umfang des Anspruchs fällt. Es zeigt:
- Fig. 1: eine Erntemaschine in Seitenansicht und in schematischer Darstellung,
- Fig. 2: ein Schaltdiagramm des Bordcomputers und der Sensoren,
- Fig. 3: eine Einrichtung zur Inhaltsstoffmessung,
- Fig. 4: den Sensor der Einrichtung zur Inhaltsstoffmessung der Figur 3,
- Fig. 5: ein Gespann aus Traktor und Ballenpresse mit einem Sensor nach der Erfindung, und
- Fig. 6: ein anderes Gespann aus Traktor und Ballenpresse mit einem Sensor.

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein reihenunabhängiges Maisgebiss ist, vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist.

An der in Figur 1 dargestellten Erntemaschine 10 sind einige Sensoren zur Messung des Flusses des die Erntemaschine 10 pro Zeiteinheit durchströmenden. Erntegutes, des sog. Durchsatzes, vorgesehen. Ein erster Durchsatzsensor 28 misst den Abstand zwischen zwei Vorpresswalzen 30, die zwischen der Erntegutaufnahmevorrichtung 20 und der Häckseltrommel 22 angeordnet sind, und zwischen denen das Erntegut hindurchgefördert wird, mittels eines von der federnd aufgehängten Vorpresswalze 30 betätigten Schiebe- oder Drehwiderstandes (Potentiometer). Weiterhin wird die Drehzahl einer der Vorpresswalzen mittels eines zweiten Sensors 32 gemessen. Außerdem können Sensoren das Antriebsdrehmoment der Fördervorrichtung 24 sowie der Nachzerkleinerungseinrichtung 28 messen.

Ein mit einer Anzeige 36 verbundener Bordcomputer 40 dient zur Aufzeichnung und Auswertung der gemessenen Daten.

Eine Lichtschranke 34 ist im Austragschacht 26 angeordnet, die feststellt, ob überhaupt Erntegut durch die Erntemaschine 10 gefördert wird. Eine Erfassung von Messwerten findet nur dann statt, wenn die Lichtschranke 34 eine Förderung von Erntegut detektiert. Über den Abstand der Vorpresswalzen 30 und ihre Drehzahl bzw. Drehgeschwindigkeit lässt sich der Fluss (also die Rate) des Volumens errechnen, das die Erntemaschine 10 pro Zeiteinheit durchströmt. Aufgrund der Vorpressung durch die Vorpresswalzen 30 wird eine annähernd konstante Dichte des Erntegutes erreicht. Unter dieser Voraussetzung ist der Volumenfluss direkt proportional zum Massenfluss. Die Lichtschranke 34 gibt eine Information darüber ab, ob Erntegut im Austragschacht 26 vorhanden ist. Mit dieser Information können alle Messsignale getriggert werden. Eine Messung somit erfolgt nur dann, wenn die Lichtschranke 34 Material erfasst. Weiterhin ermöglicht die Lichtschranke eine Korrekturfunktion, da es bei sehr geringem Erntegutfluss möglich ist, dass die Vorpresswalze 30 nicht ausgelenkt wird, aber dennoch Erntegut vorhanden ist. Anhand des Signals der Lichtschranke wird dieser Sachverhalt erkannt, und der Erntegutfluss kann beispielsweise über einen konstanten Korrekturfaktor oder -summanden berichtigt werden.

Um einen Ertrag zu errechnen, werden außerdem Informationen über die aktuelle Fahrgeschwindigkeit und Arbeitsbreite benötigt. Die Fahrgeschwindigkeit kann aus den Daten der Vortriebseinrichtungen der Erntemaschine 10 entnommen oder über einen Radarsensor 38 erfasst werden. Mittels eines GPS- (Global Positioning System) Sensors 42 kann der Ertrag mittels des Bordcomputers 40 teilflächenspezifisch kartiert werden.

Weiterhin ist die Erntemaschine 10 mit einer Feuchtigkeitsmesseinrichtung 44 zur Messung der Feuchte des Erntegutes ausgestattet. Sie kann in an sich bekannter Weise erfolgen, beispielsweise konduktiv (Leitwertmessung), dielektrisch oder kapazitiv, mit Mikrowellen oder optisch im nahen Infrarotbereich. Diese Messverfahren sind an sich bekannt und bedürfen daher keiner näheren Erläuterung.

Erfindungsgemäß ist eine Messeinrichtung 46 zur Messung bestimmter Inhaltsstoffe des Erntegutes vorgesehen. Sie bestimmt den prozentualen Anteil dieser Inhaltsstoffe im Erntegut und arbeitet ebenfalls optisch im Transmissionsund/oder Reflexionsbetrieb im sichtbaren Bereich und/oder nahen Infrarotbereich. Für die Triggerung (Aktivierung) dieser Einrichtung 46 wird das Signal der Lichtschranke 34 verwendet. Am Bordcomputer 40 können damit Wasser-, Rohprotein-, Fettgehalt etc. des Erntegutes angezeigt und georeferenziert abgespeichert werden. Die Messeinrichtung 46 ist außerdem eingerichtet, weitere Parameter des Erntegutes zu erfassen, nämlich die Faserlänge, den Fasergehalt und den Gehalt an Trockensubstanz.

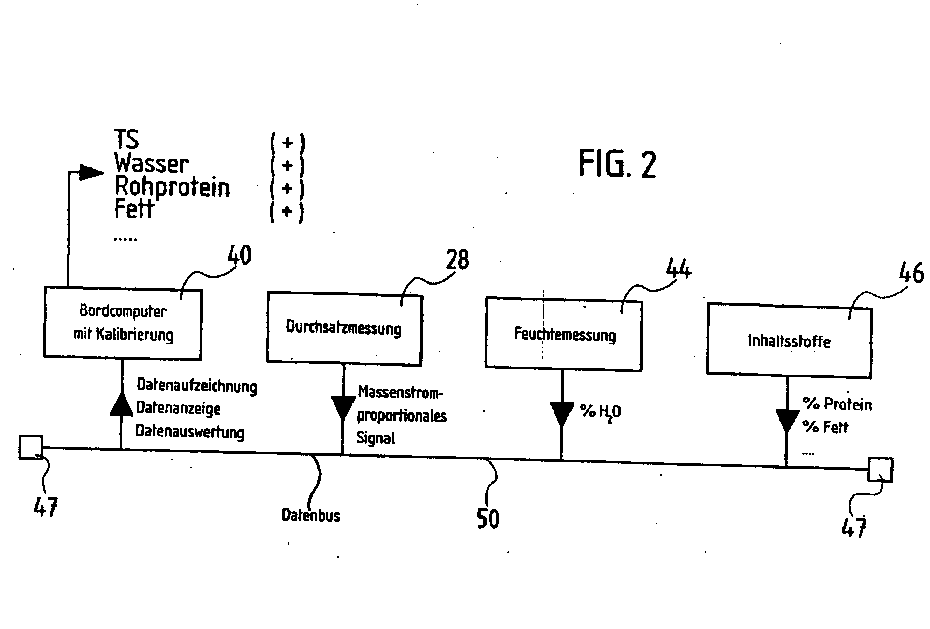

In Figur 2 ist ein schematisches Schaltdiagramm wiedergegeben, das die Verbindung zwischen Bordcomputer 40 und dem Durchsatzsensor 28, der Feuchtigkeitsmesseinrichtung 44 zur Messung der Feuchte des Erntegutes, sowie der Einrichtung zur Messung der Inhaltsstoffe 46 über einen Datenbus 50 darstellt. Der Datenbus 50 erspart das Verlegen separater Kabel, und kann auch mit weiteren Einrichtungen der Erntemaschine 10, wie dem Motor und Bedienungseinrichtungen in Verbindung stehen, was durch die kleinen Rechtecke 47 an beiden Enden des Busses 50 angedeutet wird. Wird der Datenbus 50 nur für die Messeinrichtung verwendet, ist er an beiden Enden mit Abschlusswiderständen abzuschließen. Die Zeichnung verdeutlicht schematisch, dass dem Bordcomputer 40 vom Durchsatzsensor ein massenstromproportionales Signal, von der Feuchtigkeitsmesseinrichtung 44 ein Signal, das eine Information über den Wassergehalt des Erntegutes, sowie von der Messeinrichtung 46 ein Signal, das den Gehalt des Erntegutes an bestimmten Inhaltsstoffen, wie Protein oder Fett, zugeführt wird. Diese Informationen werden kontinuierlich angezeigt und abgespeichert.

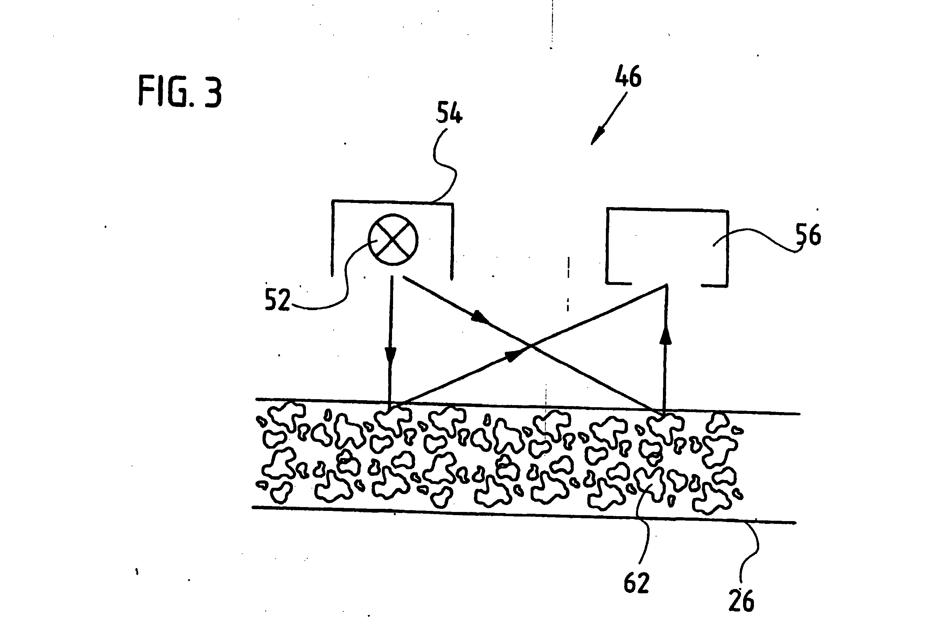

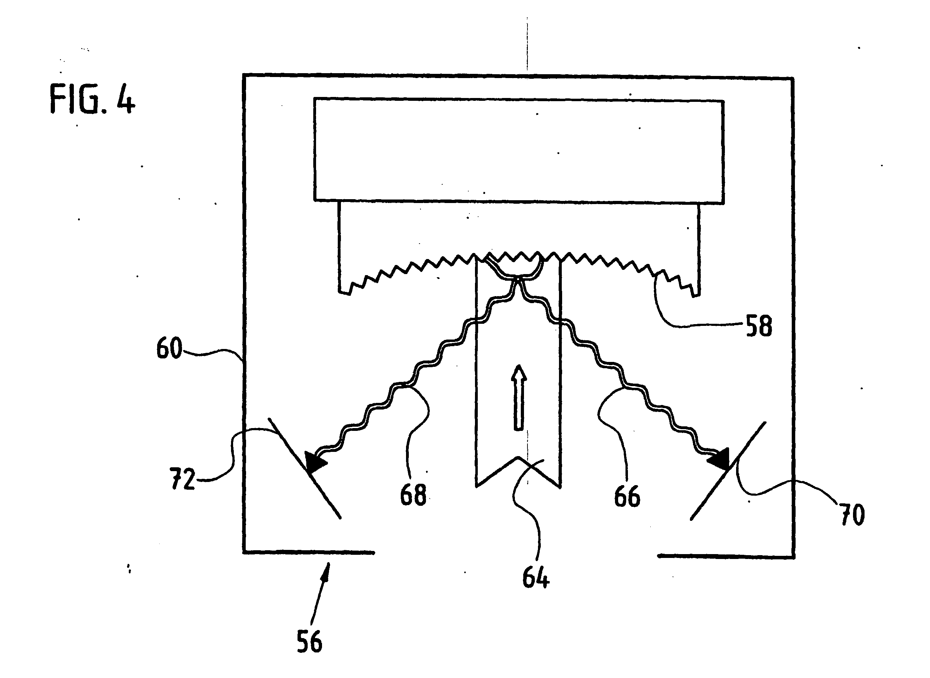

In Figur 3 ist eine Messeinrichtung 46 dargestellt. Sie umfasst eine innerhalb eines Lampengehäuses 54 angeordnete Lampe 52, deren breitbandiges (weisses) Licht den vom Erntegut 62 durchströmten Innenraum der Austragseinrichtung 26 erreicht. Vom Erntegut 62, das die Austragseinrichtung 26 durchströmt, reflektiertes Licht erreicht einen Sensor 56, dessen detaillierter Aufbau aus Figur 4 hervorgeht.

Der Sensor 56 weist ein Gehäuse 60 auf, in dessen Innenraum ein parabelförmiger Spiegel 58 angeordnet ist, der eine Oberfläche mit Erhebungen mit dreieckförmigem Querschnitt aufweist. Die Erhebungen erstrecken sich senkrecht zur Zeichenebene. Der Spiegel 58 streut das vom Erntegut reflektierte, breitbandige Licht 64 in wellenlängenabhängige Richtungen durch konstruktive bzw. destruktive Interferenz, da die Erhebungen relativ klein dimensioniert und in der Zeichnung überdimensional-dargestellt sind. Es entstehen zwei vom Spiegel 58 reflektierte Lichtstrahlen 66, 68, die in Figur 4 nach links und rechts abgelenkt werden und jeweils einen unterschiedlichen Wellenlängenbereich umfassen. Die Lichtstrahlen 66, 68 erreichen jeweils einen Detektor 70, 72. Die Detektoren 70, 72 umfassen mehrere nebeneinander angeordnete lichtempfindliche Elemente, z. B. (Si- oder InGaAS-) Dioden oder CCDs. Das Ausgangssignal jedes Elements der Detektoren 70, 72 entspricht somit der empfangenen Intensität in einem bestimmten Lichtwellenlängenbereich, der durch die Position des Elements des Detektors 70, 72 und die Beugungsrichtung des Spiegels 58 definiert ist. Anhand der Ausgangssignale der Elemente Detektoren 70, 72 kann mit einem Computer, der der Messeinrichtung 46 zugeordnet ist, oder mit dem Bordcomputer 40 eine Auswertung der gemessenen Spektren erfolgen, anhand derer die Bestimmung des Anteils bestimmter Inhaltsstoffe möglich ist. Als Wellenlängenbereich kommt das nahe Infrarot und das sichtbare Licht infrage, z. B. der Bereich von 400 bis 1700 nm.

Es wäre denkbar, anstelle des mit einem Gitter ausgestatteten Spiegels 58 zur wellenlängenabhängigen Streuung des Lichtes wenigstens ein Prisma zu verwenden, das das Licht durch seine Dispersion spektral zerlegt.

Anzumerken ist, dass beliebige Messeinrichtungen 46, die im sichtbaren Wellenlängenbereich und/oder nahen Infrarotbereich arbeiten, verwendbar sind. So können anstelle des gezeigten Spiegels 58 mit Gitter bzw. Prismen auch Filter treten, die beispielsweise, wie in der EP 511,184 A und den dort genannten Referenzen offenbart, drehbar auf einer Scheibe angeordnet sind.

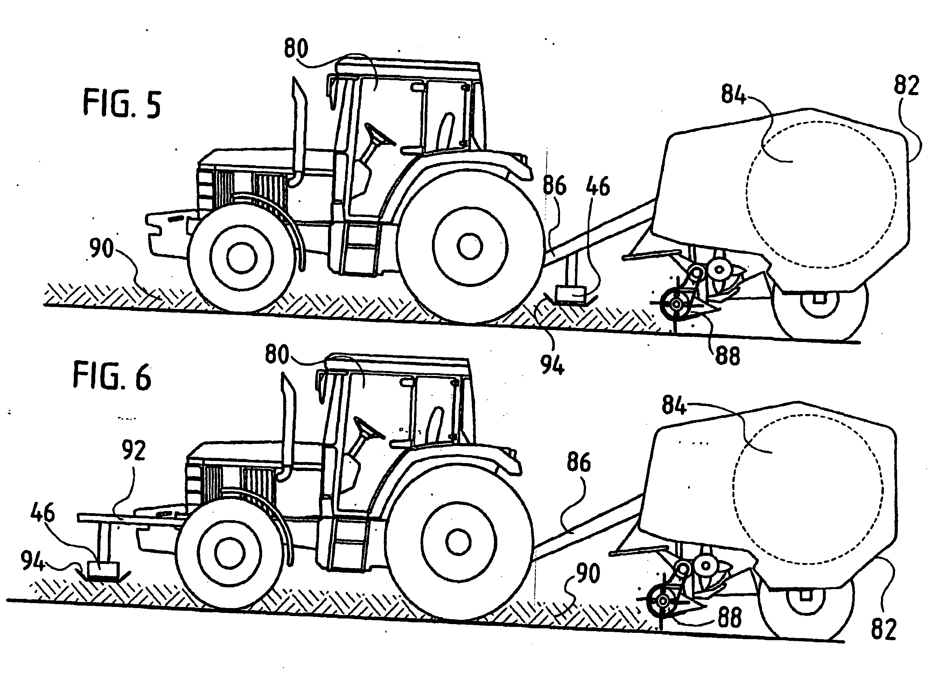

In Figur 5 ist eine Messeinrichtung 46 zwischen einem Traktor 80 und einer dahinter gehängten Ballenpresse 82 angeordnet. Die Ballenpresse 82 ist mit einer Gutaufnahmeeinrichtung 88 in Form einer Pick-Up versehen, und formt aufgenommenes Erntegut, insbesondere Gras, zu einem Ballen 84. Die Messeinrichtung 46 ist an der Deichsel 86 zwischen Traktor 80 und Ballenpresse 82 auf einem Schlitten 94 angeordnet, der über das in einem Schwad 90 abgelegte Erntegut gleitet. Dadurch ist die Messeinrichtung 46 unmittelbar oberhalb des Schwads 90 des Ernteguts angeordnet und kann unproblematisch dessen Eigenschaften erfassen.

In Figur 6 ist die Messeinrichtung 46 an einer Aufhängung 92 an der Frontseite des Traktors 80 befestigt. Sie ist ebenfalls an einem Schlitten 94 angebracht, der über das im Schwad 90 abgelegte Erntegut gleitet.

## Patentansprüche

1. Messeinrichtung (46) zur Messung von Inhaltsstoffen in Erntegut (62) und/oder der Farbe des Ernteguts (62), die an einer landwirtschaftlichen Maschine angebracht ist, **dadurch gekennzeichnet, dass** die Messeinrichtung bezüglich des Gutflusses stromauf einer Gutaufnahmeeinrichtung (20, 88) der landwirtschaftlichen Maschine anbringbar ist und an dem Erntegut (62) vorbeibewegt wird.

2. Messeinrichtung (46) nach Anspruch 1, **dadurch gekennzeichnet, dass** sie den Gehalt des Erntegutes (62) an organischen Inhaltsstoffen misst.

3. Messeinrichtung (46) nach Anspruch 1 oder 2, **dadurch gekennzeichnet, dass** sie den Gehalt des Erntegutes (62) an Stärke und/oder enzymlöslichen organischen Substanzen (ElosT) und/oder nichtorganischen Mineralstoffen, wie z.B. Natrium und Magnesium (Asche) und/oder Rohprotein und/oder Öl und/oder Wasser ermittelt.

4. Messeinrichtung (46) nach einem der Ansprüche 1 bis 3, **dadurch gekennzeichnet, dass** sie im sichtbaren Wellenlängenbereich oder im nahen Infrarotbereich arbeitet, insbesondere mit Wellenlängen zwischen 100 nm und 1 mm, vorzugsweise zwischen 400 nm und 1,7 µm.

5. Messeinrichtung (46) nach einem der Ansprüche 1 bis 4, **dadurch gekennzeichnet, dass** sie ein Spektrometer umfasst, das die Intensität vom Erntegut reflektierten und/oder transmittierten breitbandigen Lichts wellenlängenaufgelöst erfasst.

6. Messeinrichtung (46) nach einem der Ansprüche 1 bis 5, **dadurch gekennzeichnet, dass** sie mit einer Einrichtung, insbesondere einem Computer (40), verbunden ist, die ihre Messwerte, vorzugsweise zusammen mit weiteren Messwerten, beispielsweise der Feuchtigkeit und/oder der Durchsatzmenge des Erntegutes (62), georeferenziert aufzeichnet.

7. Messeinrichtung (46) nach einem der Ansprüche 1 bis 6, **dadurch gekennzeichnet, dass** sie auf einem Schlitten (94) angeordnet ist, um in einem Schwad (90) abgelegtes Erntegut zu untersuchen.

8. Messeinrichtung (46) nach einem der Ansprüche 1 bis 7, **dadurch gekennzeichnet, dass** sie an einem Zugfahrzeug, insbesondere Traktor (80), vorzugsweise an dessen Vorderseite, und/oder an einer Deichsel (86) und/oder Kupplung eines an ein Zugfahrzeug angehängten landwirtschaftlichen Geräts angebracht ist.

9. Baumaschine oder landwirtschaftliche Maschine, insbesondere Feldhäcksler, Mähdrescher, Ballenpresse, Traktor, Teleskoplader, Frontlader, Ladewagen oder Hackfruchterntemaschine, mit einer Messeinrichtung (46) nach einem der vorhergehenden Ansprüche.

## Claims

1. Measuring device (46) for measuring content materials in crop (62) and/or the colour of the crop (62) which is mounted on an agricultural machine, **characterised in that** the measuring device can be mounted upstream, relative to the crop stream, of a crop receiving device (20, 88) of the agricultural machine and is moved past the crop (62).

2. Measuring device (46) according to claim 1, **characterised in that** it measures the content in the crop (62) of organic content materials.

3. Measuring device (46) according to claim 1 or 2, **characterised in that** it determines the content in the crop (62) of starch and/or enzyme-soluble organic substances (ElosT) and/or inorganic mineral materials, such as for example sodium and magnesium (ash) and/or crude protein and/or oil and/or water.

4. Measuring device (46) according to one of the claims 1 to 3, **characterised in that** it operates in the visible wavelength range or in the near infrared range, in particular with wavelengths between 100 nm and 1 mm, preferably between 400 nm and 1.7 µm.

5. Measuring device (46) according to one of the claims 1 to 4, **characterised in that** it comprises a spectrometer which detects the intensity of the broadband light, which is reflected and/or transmitted by the crop, by wavelength resolution.

6. Measuring device (46) according to one of the claims 1 to 5, **characterised in that** it is connected to a device, in particular to a computer (40) which displays its values geographically referenced, preferably together with further measured values, for example the moisture and/or the throughput quantity of the crop (62).

7. Measuring device (46) according to one of the claims 1 to 6, **characterised in that** it is disposed upon a skid (94), in order to examine a crop deposited in a windrow (90).

8. Measuring device (46) according to one of the claims 1 to 7, **characterised in that** it is mounted on a towing vehicle, in particular a tractor (80), preferably on the front-side thereof, and/or on a drawbar (86) and/or coupling of an agricultural apparatus which is attached to a towing vehicle.

9. Construction machine or agricultural machine, in particular a field chopper, combine harvester, baling press, tractor, telescopic loader, front loader, self-loading forage box or root crop harvester, having a measuring device (46) according to one of the preceding claims.

## Revendications

1. Dispositif de mesure (46) pour mesurer des matières constitutives dans une matière récoltée (62) et/ou de la couleur de la matière récoltée (62), qui est amenée sur une machine agricole, **caractérisé en ce que** le dispositif de mesure, peut être monté, d'une manière rapportée au flux de matière, en amont d'un dispositif (20, 88) de réception de la récolte de la machine agricole et se déplace devant la matière récoltée (62).

2. Dispositif de mesure (46) selon la revendication 1, **caractérisé en ce qu'**il mesure la teneur de la matière récoltée (62) en matières constitutives organiques.

3. Dispositif de mesure (46) selon la revendication 1 ou 2, **caractérisé en ce qu'**il détermine la teneur de la matière récoltée (62) en amidon et/ou en substances organiques solubles avec un enzyme (ElosT) ou des substances minérales non organiques comme par exemple du sodium ou du magnésium (cendres), et/ou une protéine brute et/ou de l'huile et/ou de l'eau.

4. Dispositif de mesure (46) selon l'une des revendications 1 à 3, **caractérisé en ce qu'**il travaille dans la gamme des longueurs d'onde visibles et/ou dans la gamme du proche infrarouge, notamment avec des longueurs d'onde comprises entre 100 nm et 1 µm et de préférence entre 400 nm et 1,7 µm.

5. Dispositif de mesure (46) selon l'une des revendications 1 à 4, **caractérisé en ce qu'**il comprend un spectromètre, qui détecte, avec une résolution des longueurs d'onde, l'intensité de la lumière à large bande réfléchie et/ou transmise par la matière récoltée.

6. Dispositif de mesure (46) selon l'une des revendications 1 à 5, **caractérisé en ce qu'**il est relié à un dispositif, notamment à un ordinateur (40), qui enregistre, d'une matière rapportée à une référence géographique, ses valeurs de mesure, de préférence conjointement avec d'autres valeurs de mesure, par exemple l'humidité et/ou le débit de la matière récoltée (62).

7. Dispositif de mesure (46) selon l'une des revendications 1 à 6, **caractérisé en ce qu'**il est disposé sur un chariot (94), pour examiner la matière récoltée déposée dans un andain (90).

8. Dispositif de mesure (46) selon l'une des revendications 1 à 7, **caractérisé en ce qu'**il est monté sur un véhicule tracteur, notamment un tracteur (80), de préférence sur le côté avant de ce dernier et/ou sur un timon (86) et/ou sur un attelage d'un appareil agricole accroché à un véhicule tracteur.

9. Machine de chantier ou machine agricole, notamment ramasseuse-hacheuse, moissonneuse-batteuse, presse à balles, tracteur, chargeur télescopique, chargeur frontal, véhicule de chargement ou machine pour la récolte avec sarclage, comportant un dispositif de mesure (46) selon l'une des revendications précédentes.
